# FASCICULE DE BREVET EUROPEEN

(11) **EP 0 612 511 B1**
(45) Date de publication et mention de la délivrance du brevet: **24.07.1996**
(21) Numéro de dépôt: 94420023.7
(22) Date de dépôt: 25.01.1994
(51) Int. Cl.: A61J 11/00, B29C 45/56

(54) **Procédé et appareillage pour la réalisation de tétines pour biberons, ainsi que tétines obtenues**
Verfahren und Vorrichtung zur Herstellung von Saugern für Säuglingsflaschen sowie Sauger
Process and apparatus for manufacturing nipples for nursing bottles and nipple so obtained

(30) Priorité: 26.01.1993 FR 9301009
(43) Date de publication de la demande: 31.08.1994
(73) Titulaire: Grasset, Joseph, F-43320 Loudes (FR)
(72) Inventeur: Grasset, Joseph, F-43320 Loudes (FR)
(74) Mandataire: Monnier, Guy

(56) Documents cités:
- EP-A- 0 323 315
- CH-A- 602 104
- DE-A- 4 005 410
- FR-A- 2 543 056

## Description

La présente invention a trait aux tétines pour biberons d'allaitement et elle vise plus particulièrement celles dont la téterelle est percée d'une ouverture se présentant sous la forme d'une fente à profil allongé, de façon notamment à ce que le débit de la tétine résulte de l'orientation conférée à celle-ci dans la bouche du nourrisson.

Les tétines de ce type sont réalisées par moulage d'une matière vulcanisable de nature synthétique (silicone) ou naturelle (caoutchouc), de sorte que le perçage de la téterelle peut être effectué soit à l'aide d'une opération mécanique de coupe intervenant après conformation, soit directement lors du moulage.

Dans le premier cas, on obtient une fente à lèvres jointives, qui s'oppose à tout écoulement accidentel lors des manipulations du biberon. Par contre, le perçage implique une opération de reprise sur les tétines moulées, si bien que l'augmentation de coût n'est pas négligeable ; de plus et surtout, le profil de la fente n'est pas rigoureusement constant et la découpe mécanique engendre des micro-coupures qui affectent la résistance de la téterelle et facilitent la déchirure de celle-ci au niveau des extrémités de la fente.

Le perçage direct lors de la conformation par moulage permet d'éviter ces inconvénients de surcoût et d'affaiblissement, en même temps qu'il garantit la régularité du profil de la fente. En revanche, il convient d'observer que les deux lèvres de cette fente ne peuvent en aucun cas être jointives, si bien que la tétine n'est pas hermétiquement fermée.

C'est à l'ensemble des inconvénients des deux modes de perçage usuels qu'entend remédier la présente invention, laquelle a pour premier objet le procédé de réalisation qui est défini à la revendication 1.

En fait l'invention consiste essentiellement à ne réaliser par moulage qu'un avant-perçage intéressant seulement une partie de l'épaisseur de la téterelle, et à obtenir le perçage proprement dit par une opération mécanique de découpe qui intervient dans le moule de conformation, après compression de la matière injectée, en évitant de ce fait une reprise des articles moulés.

L'invention a pour second objet l'appareillage nécessaire à la mise en oeuvre du procédé ci-dessus définir cet appareillage étant défini à la revendication 2.

On notera que cet appareillage qui comprend, à la façon en soi connue, un moule ouvrable dont l'un des deux éléments renferme un poinçon mobile d'éjection dont la tête est profilée pour constituer la paroi intérieure de l'empreinte de moulage au- niveau de la téterelle, est remarquable en ce que la paroi extérieure de la tête du poinçon comporte une saillie profilée pour former couteau de perçage, tandis qu'à ce poinçon sont associés des moyens pour lui impartir, préalablement à son déplacement axial usuel en vue de l'éjection de la tétine lors de l'ouverture du moule en fin de conformation, un mouvement axial de faible amplitude propre à opérer le sectionnement de la mince membrane qui subsiste au niveau de la fente.

Le dessin annexé, donné à titre d'exemple, permettra de mieux comprendre l'invention, les caractéristiques qu'elle présente et les avantages qu'elle est susceptible de procurer :
Fig. 1 est une coupe axiale schématique d'un appareillage de moulage établi conformément à l'invention.
Fig. 2 reproduit à échelle agrandie la partie de l'appareillage de fig. 1 au niveau de l'extrémité de la tétine à réaliser.
Fig. 3 est une vue en élévation montrant l'extrémité de la tête du poinçon mobile d'éjection.
Fig. 4 et 5 sont des coupes semblables à celle de fig. 2, illustrant deux phases du processus de conformation.
Fig. 6 montre en coupe axiale la téterelle de la tétine finalement obtenue.
Fig. 7 illustre une variante de mise en oeuvre du procédé suivant l'invention.

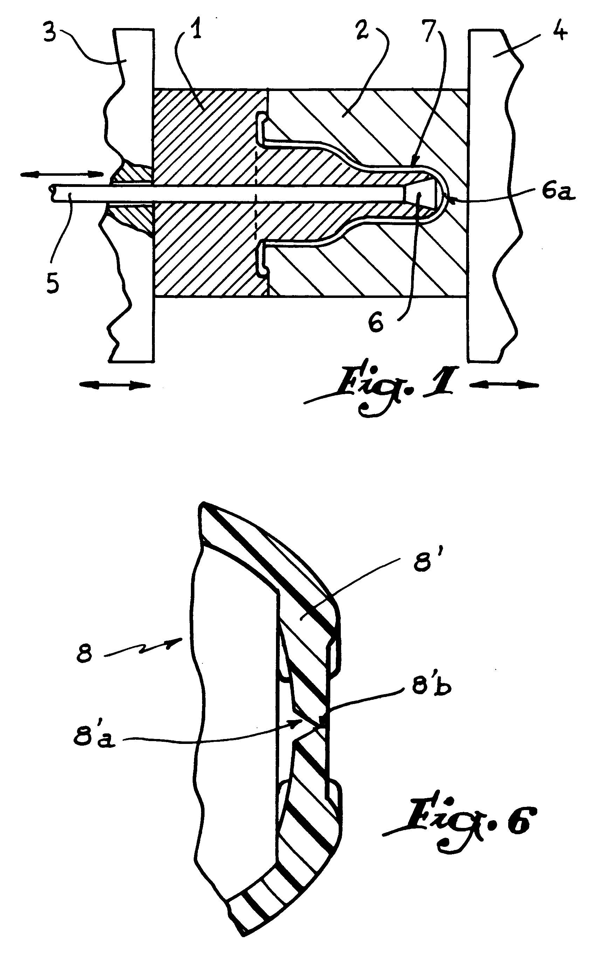

A la façon en soi connue, l'appareillage montré en fig. 1 comprend un moule ouvrable formé par deux éléments 1 et 2 qui sont fixés sur les plateaux 3 et 4 d'une presse d'injection classique. L'élément 1 est traversé par un poinçon mobile d'éjection 5 dont la tête épanouie 6 participe, au niveau de L'extrémité ou téterelle de la tétine à obtenir, à la formation de l'empreinte de moulage 7 destinée à recevoir la matière vulcanisable injectée.

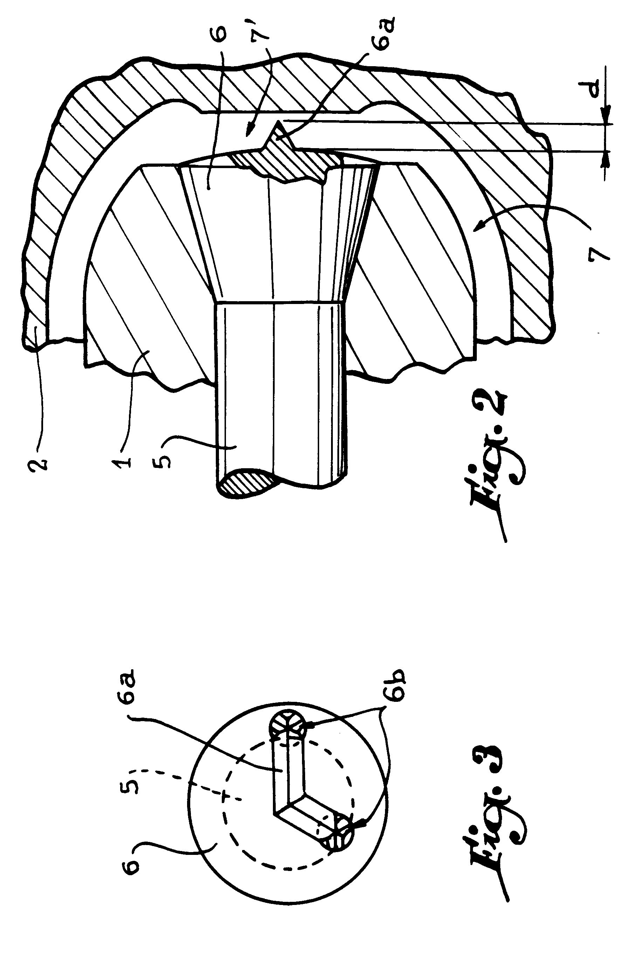

Conformément à l'invention et comme représenté en détail en fig. 2, la face de la tête 6 qui correspond à la partie 7' de l'empreinte 7 est pourvue d'une saillie ou couteau 6a à section triangulaire dont le profil en élévation est identique au profil de la fente allongée à obtenir sur la téterelle des tétines.

Dans l'exemple de réalisation pris en considération, on a supposé que les tétines à obtenir étaient du type de celles visées au Brevet français FR-A-2 662 077 déposé au nom du Demandeur le 17 Mai 1990, si bien que la saillie ou couteau 6a de la tête 6 présente une partie principale à profil brisé (à laquelle on a affecté la référence 6a en fig. 3) et deux extrémités 6b à profil circulaire. Il doit cependant être noté que l'invention est applicable à tout autre type de tétine à débit réglable, quel que soit le profil allongé du perçage.

Dans tous les cas, il est essentiel d'observer que l'épaisseur d (fig. 2) de la saillie 6a-6b est inférieure à l'épaisseur que présente l'empreinte de moulage dans la partie 7' correspondant à la téterelle de la tétine.

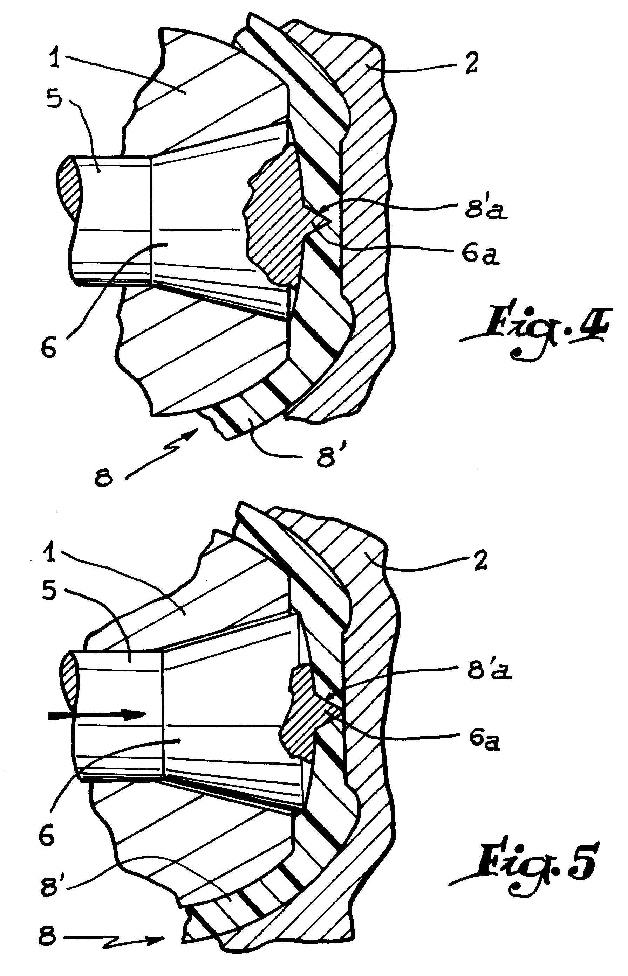

Dans ces conditions et à la manière illustrée en fig. 4, une fois la matière injectée dans l'empreinte 7, le couteau 6a-6b réalise dans la téterelle 8' de la tétine moulée 8 un avant-perçage borgne qui détermine une mince membrane présentant le profil dudit couteau. Si l'on suppose maintenant qu'immédiatement après décompression de la matière dans L'empreinte de moulage (décompression qui est obtenue par débridage des deux plateaux de la presse), mais avant ouverture complète du moule 1-2, on imprime au poinçon 5 un très léger mouvement axial dirigé vers l'élément 2 du moule, le couteau 6a-6b va opérer, par appui de la matière contre la paroi dudit élément, le perçage complet de la téterelle 8' (cf. fig. 5), si bien qu'une fois que le moule a été ouvert et que le poinçon 5 a opéré son déplacement usuel complet pour assurer l'éjection de la tétine 8, la téterelle 8' de cette dernière présente un perçage établi au profil désiré.

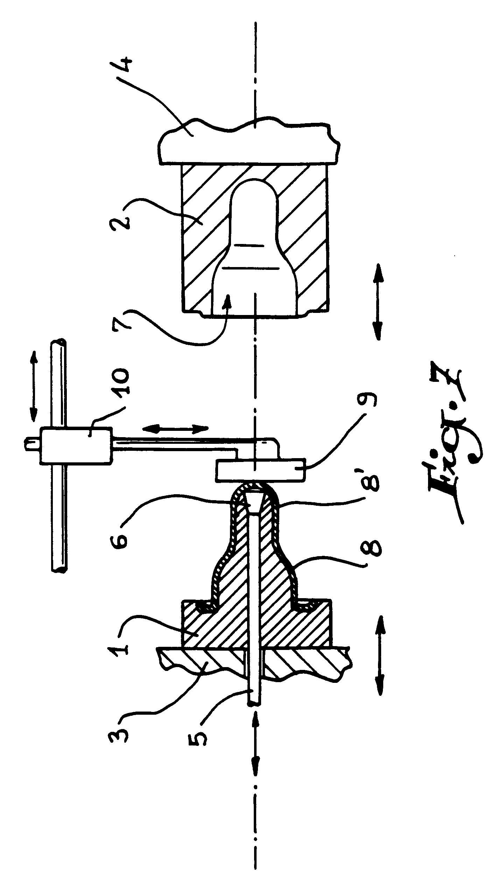

Fig. 6 fait bien ressortir que compte tenu du profil triangulaire présenté en section par le couteau 6a-6b, le perçage obtenu comporte une entrée 8'a à section en V suivie d'une découpe 8'b à lèvres jointives.

La découpe finale étant effectuée alors que la matière injectée se trouve dans L'empreinte 7-7' à l'état décomprimé et à la température de vulcanisation, le perçage suivant l'invention ne détermine aucun écrasement analogue à celui déterminé par les perçages mécaniques classiques, ce qui évite tout risque de formation de micro-fissures susceptibles de nuire à la solidité, à la Longévité et à la fiabilité du perçage. Le caractère jointif obtenu au niveau de la découpe 8'b évite tout écoulement intempestif au cours des manipulations du biberon.

En dépit des avantages présentés par le perçage final à l'intérieur d'un moule fermé, on conçoit que le procédé suivant l'invention est susceptible d'être mis en oeuvre à l'aide de l'appareillage illustré en fig. 7. Dès que le moule 1-2 est ouvert, l'automate de programmation amène au contact de la téterelle 8' un plateau 9 apte à former appui lors du mouvement axial de découpe du poinçon 5-6. A cet effet, ce plateau 9 est porté par un coulisseau 10 qui est animé d'un déplacement dans le sens vertical comme dans le sens horizontal.

## Revendications

1. Procédé pour la réalisation par conformation à l'intérieur d'un moule ouvrable (1-2) du type à poinçon mobile d'éjection (5-6), de tétines (8) dont la téterelle (8') comporte un perçage à profil allongé, caractérisé en ce qu'il consiste à faire comporter à la face de la tête (6) du poinçon qui est tournée en direction de l'empreinte de moulage (7-7') un couteau en saillie (6a-6b) établi au profil du perçage à réaliser, l'épaisseur (d) de ce couteau étant inférieure à l'épaisseur de ladite empreinte de façon à ne réaliser dans cette dernière qu'un pré-perçage (8a), et à impartir au- poinçon, alors que la matière injectée est à l'état décomprimé mais encore à la température de vulcanisation, un très léger mouvement axial apte à sectionner la membrane qui subsiste au niveau du couteau.

2. Appareillage pour la réalisation, par injection d'une matière vulcanisable à l'intérieur d'un moule ouvrable (1-2) équipé d'un poinçon mobile d'éjection (5-6), de tétines (8) pour biberons dont la téterelle (8') présente un perçage (8a-8b) à profil allongé caractérisé en ce que la face de la tête (6) du poinçon qui est tournée en direction de l'empreinte de moulage (7) comporte un couteau en saillie (6a-6b) qui est établi au profil du- perçage à réaliser (8a-8b) et qui n'occupe qu'une partie seulement (d) de l'épaisseur de l'empreinte de moulage, et en ce que ledit piston est animé, alors que la matière injectée se trouve à l'état décomprimé mais encore à la température de vulcanisation, d'un léger mouvement axial propre à sectionner la membrane qui se trouve en vis à-vis du couteau précité.

## Claims

1. Process for manufacturing nipples (8) by means of forming inside an openable mould (1 - 2) of the type having a mobile ejection plunger (5 - 6), the head (8') of the nipples (8) including a puncture of elongate profile, characterized in that it consists in giving that face of the head (6) of the plunger facing in the direction of the mould impression (7 - 7') a projecting cutter (6a - 6b) established with the profile of the puncture which is to be produced, the thickness (d) of this cutter being smaller than the thickness of the said impression in such a way as to form in the latter only a partial puncture (8a), and in imparting to the plunger, while the injected material is in the decompressed state but still at the vulcanization temperature, a very slight axial movement capable of cutting through the membrane which remains at the level of the cutter.

2. Apparatus for manufacturing nipples (8) for nursing bottles by injecting a vulcanizable material inside an openable mould (1 - 2) equipped with a mobile ejection plunger (5 - 6), the head (8') of the nipples (8) having a puncture (8a - 8b) of elongate profile, characterized in that that face of the head (6) of the plunge facing in the direction of the mould impression (7) includes a projecting cutter (6a - 6b) which is established with the profile of the puncture which is to be produced (8a - 8b) and which takes up only a part (d) of the thickness of the mould impression, and in that while the injected material is in the decompressed state but still at the vulcanization temperature, the said plunger is driven with a slight axial movement capable of cutting through the membrane which is opposite the above-mentioned cutter.

## Patentansprüche

1. Verfahren zum Erzeugen von Saugern (8), deren Saugabschnitt (8') eine Bohrung mit länglichem Querschnitt hat, durch Ausbilden im Innern einer zu öffnenden Form des Typs mit bewegbarem Auswerfer (5-6), dadurch gekennzeichnet, daß es darin besteht, an der Stirnseite des Kopfstücks (6) des Auswerfers, die der Formvertiefung (7-7') zugewandt ist, ein vorstehendes Messer (6a-6b) mit dem Profil der zu erzeugenden Bohrung vorgesehen ist, wobei die Erstreckung (d) des Messers kleiner als die Erstreckung der Formvertiefung ist, um nur eine Vorbohrung (8a) in letzterer zu erzeugen, wobei beim Betätigen des Auswerfers, während das eingespritzte Material in einem dekomprimierten Zustand ist, aber noch Vukanisationstemperatur hat, eine sehr leichte Axialbewegung reicht, um die auf der Höhe des Messers befindliche Membran zu durchtrennen.

2. Vorrichtung zum Erzeugen von Saugern (8) für Saugflaschen, deren saugabschnitt (8') eine Bohrung (8a-8b) mit länglichem Querschnitt aufweist, durch Einspritzen eines vulkanisierbaren Materials in das Innere einer zu öffnenden mit einem bewegbaren Auswerfer zum Auswerfen (5-6) ausgestatteten Form (1-2), dadurch gekennzeichnet, daß an der der Formvertiefung (7) zugewandten Stirnseite des Kopfstücks (6) des Auswerfers ein vorstehendes Messer vorgesehen (6a-6b) ist, das das Profil der zu realisierenden Bohrung (8a-8b) festlegt und das nur einen Teil der Erstreckung der Formvertiefung belegt, und daß während sich das eingespritzte Material in dekomprimierten Zustand befindet aber noch Vulkanisationstemperatur hat der Stempel zu einer leichten Axialbewegung betätigt wird, die geeignet ist, die gegenüber dem oben erwähnten Messer befindliche Membran zu durchtrennen.
